# EUROPEAN PATENT APPLICATION

(11) **EP 3 127 660 A1**
(43) Date of publication of application: **08.02.2017**
(21) Application number: 16182346.3
(22) Date of filing: 02.08.2016
(51) Int. Cl.: B25J 5/02, B25J 9/00, B25J 15/00, B65H 67/06

(54) **AUTOMATIC CREEL LOADING APPARATUS**

(30) Priority: 03.08.2015 KR 20150109298
(71) Applicant: Hankook Tire Co., Ltd., Seoul 06133 (KR)
(72) Inventor: SON, Hyo Seung, 32723 CHUNGCHEONGNAM-DO (KR)
(74) Representative: Intès, Didier Gérard André

(57) **Abstract**

Disclosed is an automatic creel loading apparatus. The automatic creel loading apparatus is configured to unload creels (1), around which wires for use in manufacturing a tire are wound and which are stacked in multiple layers and multiple rows on a loading pallet (2), from the loading pallet (2) and to carry and load the creels (1) onto loading shafts (7) of a creel stand (6), in order to supply the wires to the tire manufacturing process. The apparatus includes a loading base (3), on which the loading pallet (2) loaded with the creels (1) is disposed, an unmanned transport cart (5) for reciprocatingly moving the loading base (3) along transport rails (4), and a multi-axis rotational loading robot (8) mounted to the loading base (3) in order to unload the creels (1) from the loading pallet (2) and to carry and load each of the creels (1) onto a corresponding one of the loading shafts (7) of the creel stand (6).

## Description

### BACKGROUND OF THE INVENTION

### Field of the Invention

The present invention relates to an automatic creel loading apparatus, and more particularly, to an automatic creel loading apparatus, which is capable of automatically unloading creels wound with wires, which are used in manufacturing a tire, from a loading pallet and of automatically loading the creels onto a creel stand so as to be positioned for a subsequent manufacturing process.

### Description of the Related Art

In general, a wire, which is used in manufacturing a tire, is treated through a series of processes including unwinding from a creel, coating with rubber, rolling up, and wrapping.

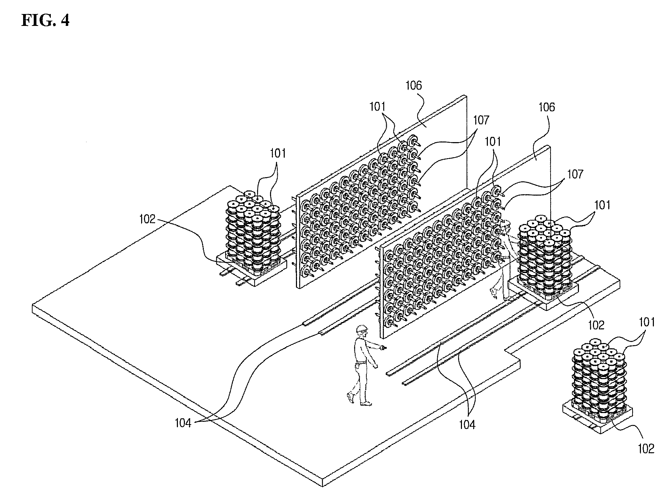

Such a wire is wound around a creel like a cylindrical-shaped bobbin. Conventionally, as illustrated in FIG. 4, in order to carry the creel wound with wire to a position for the manufacturing process, several workers must push around a loading pallet 102, on which a plurality of creels 101 is stacked in multiple layers and multiple rows, on rails 104, and must load each of the creels 101 onto a corresponding one of loading shafts 107, mounted to a creel stand 106, in an insertion manner.

The reason why each of the creels 101 is loaded onto a corresponding one of the loading shafts 107 of the creel stand 106 is to simultaneously unwind wires from the plurality of creels 101 loaded onto the creel stand 106 and to immediately supply the wires to a subsequent manufacturing process.

However, according to the above-described conventional creel loading method, because workers must push around the loading pallet 102 on the rails 104, manually unload the creels 1 from the loading pallet 102, and manually load the creels 101 onto the creel stand 106 one by one, the workers' workload is heavy. Further, because workers must load the creels 101 onto the creel stand 106 at a relatively high position (about 1.8 meters high), there is a high risk of an accident.

In addition, because workers must manually carry the creels 101 one by one, there is a shortcoming in that it takes excessive time for workers to prepare the creels for the manufacturing process.

### [Cited Reference]

### [Patent Literature]

(Patent Literature 1) Korean Patent Registration No. 10-0138655 (February 19, 1998)
(Patent Literature 2) Korean Patent Registration No. 10-0597902 (June 30, 2006)

### SUMMARY OF THE INVENTION

The present invention is devised to solve the above problems, and it is an object of the present invention to provide an automatic creel loading apparatus, which is capable of simultaneously unloading a plurality of creels from a loading pallet and of automatically carrying and loading the creels onto a creel stand, thereby shortening working time, reducing workers' workload, and facilitating working management of workers.

In accordance with an aspect of the present invention, the above and other objects can be accomplished by the provision of an automatic creel loading apparatus configured to unload creels, wound with wires for use in manufacturing a tire, from a loading pallet, the creels being stacked in multiple layers and multiple rows on the loading pallet, and to carry and load the creels onto loading shafts of a creel stand, the apparatus including a loading base permitting the loading pallet loaded with the creels to be disposed thereon, an unmanned transport cart for reciprocatingly moving the loading base along transport rails, and a multi-axis rotational loading robot mounted to the loading base in order to unload the creels from the loading pallet and to carry and load each of the creels onto a corresponding one of the loading shafts of the creel stand.

The multi-axis rotational loading robot may include a rotating shaft mounted to a distal end of an arm, and a plurality of grippers mounted to the rotating shaft and arranged linearly in order to unload the creels from the loading pallet and to load the creels onto the loading shafts of the creel stand, and each of the grippers may include a creel shaft configured to be inserted into a central hole formed in each of the creels, a pushing rod for pushing each of the creels, and a chuck part configured to be expanded or contracted in a radial direction.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view for explaining the overall constitution of an automatic creel loading apparatus according to the present invention;
FIG. 2 is an enlarged perspective view of a creel gripper, which is an essential component in the present invention;
FIG. 3 is a picture showing the mounting state of a creel stand, which is applied to the present invention; and
FIG. 4 is a view for explaining a conventional creel loading apparatus.

### DETAILED DESCRIPTION OF THE INVENTION

Hereinafter, preferred embodiments of the present invention will be described in detail with reference to the attached drawings. In the following description of the present invention, a detailed description of known functions and configurations incorporated herein will be omitted when it may obscure the subject matter of the present invention. Furthermore, although preferred embodiments of the present invention will be described, it will be apparent that the technical scope of the present invention can be practiced by those skilled in the art without being restricted or limited to the preferred embodiments.

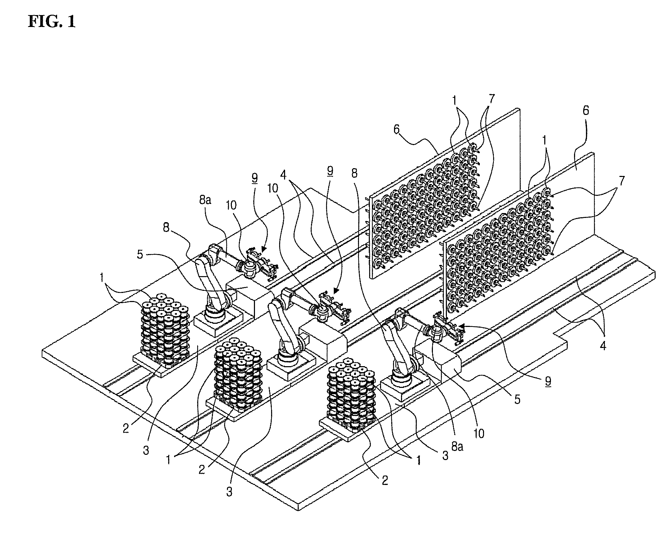

FIG. 1 is a view illustrating the overall constitution of an automatic creel loading apparatus according to the present invention. An automatic creel loading apparatus according to the present invention is configured to unload creels 1, around which wires are wound and which are stacked in multiple layers and multiple rows on a loading pallet 2, from the loading pallet 2 and to carry and load each of the creels 1 onto a corresponding one of loading shafts 7 of a creel stand 6, in order to supply the wires to the tire manufacturing process. Such an automatic creel loading apparatus according to the present invention includes a loading base 3, on which the loading pallet 2 loaded with the creels 1 is disposed, an unmanned transport cart 5 for reciprocatingly moving the loading base 3 along transport rails 4, and a multi-axis rotational loading robot 8, which is mounted to the loading base 3 in order to unload the creels 1 from the loading pallet 2 and to carry and load each of the creels 1 onto a corresponding one of the loading shafts 7 of the creel stand 6.

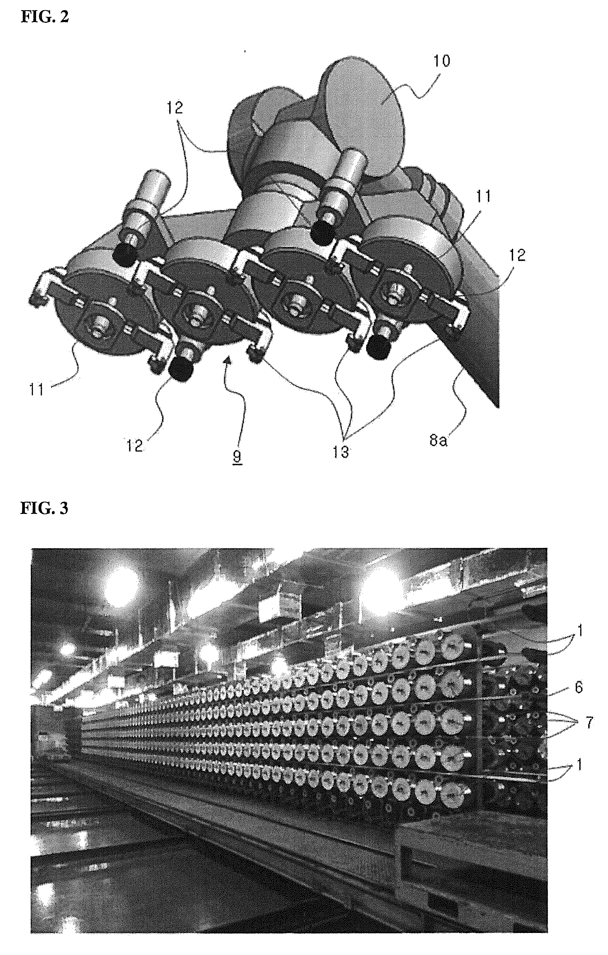

As illustrated in FIG. 2, the multi-axis rotational loading robot 8 includes a rotating shaft 10 mounted to the distal end of an arm 8a, and a plurality of grippers 9, which are mounted to the rotating shaft 10 and are arranged linearly in order to unload the creels 1 from the loading pallet 2 and to load the creels 1 onto the loading shafts 7 of the creel stand 6. Each of the grippers 9 includes a creel shaft 11, which is to be inserted into a central hole formed in the cylindrical-shaped creel 1, a pushing rod 12 for pushing the creel 1, and a chuck part 13 configured to be expanded or contracted in the radial direction.

As illustrated in FIG. 3, in order to supply the wires wound around the creels 1 to the manufacturing process, the creels 1 are loaded onto the creel stand 6 such that the creels 1 are arranged in multiple layers and multiple rows on the creel stand 6.

The operation of the automatic creel loading apparatus of the present invention, constituted as above, will now be explained.

The loading pallet 2, onto which the creels 1 are loaded in multiple layers and multiple rows, are put on the loading base 3, which is mounted on the transport rails 4, using a forklift or the like. The loading base 3 loaded with the loading pallet 2, onto which the creels 1 are loaded, is moved along the transport rails 4 by the unmanned transport cart 5, and is stopped when it arrives at a predetermined position at which the operation of loading the creels 1 onto the desired loading shafts 7 of the creel stand 6 is performed.

Subsequently, the multi-axis rotational loading robot 8 mounted to the loading base 3 is operated such that the creel shaft 11 of each of the grippers 9, which are mounted to the distal end of the arm 8a of the multi-axis rotational loading robot 8, is inserted into the central hole formed in a corresponding one of the plurality of creels 1 loaded onto the loading pallet 2, thereby fixing the creels 1 to the grippers 9. Then, the chuck part 13 of each of the grippers 9 is contracted in the radial direction, and securely grips the creel 1.

Like this, in the state in which the plurality of creels 1 is gripped linearly by the grippers 9, the multi-axis rotational loading robot 8 is rotated so that the grippers 9 mounted to the distal end of the arm 8a are aligned with respective corresponding loading shafts 7 of the creel stand 6. The chuck parts 13 of the grippers 9 are expanded in the radial direction, and thus the creels 1 gripped by the grippers 9 are released. Finally, the pushing rods 12 are operated to push the creels 1 toward the loading shafts 7 of the creel stand 6 so that the creels 1 are loaded onto the respective corresponding loading shafts 7 of the creel stand 6 in an insertion manner.

Accordingly, the creels 1 loaded onto the creel stand 6 by the above-described automatic creel loading operation are positioned so as to be ready to be used for a subsequent manufacturing process.

As is apparent from the above description, the present invention provides an automatic creel loading apparatus, which is capable of simultaneously unloading a plurality of creels wound with wires, which are used in manufacturing a tire, from a loading pallet and of automatically and rapidly carrying and loading the creels onto a creel stand so as to be supplied to the manufacturing process, thereby shortening working time, reducing workers' workload, improving working efficiency and productivity, and facilitating working management of workers.

Although a preferred embodiment of the present invention has been shown and described, it would be appreciated by those skilled in the art that changes may be made in this embodiment without departing from the principles of the invention, the scope of which is defined in the claims and their equivalents.

## Claims

1. An automatic creel loading apparatus configured to unload creels (1) wound with wires for use in manufacturing a tire from a loading pallet (2), the creels (1) being stacked in multiple layers and multiple rows on the loading pallet (2), and to carry and load the creels (1) onto loading shafts (7) of a creel stand (6), the apparatus comprising:
a loading base (3) permitting the loading pallet (2) loaded with the creels (1) to be disposed thereon;
an unmanned transport cart (5) for reciprocatingly moving the loading base (3) along transport rails (4); and
a multi-axis rotational loading robot (8) mounted to the loading base (3) in order to unload the creels (1) from the loading pallet (2) and to carry and load each of the creels (1) onto a corresponding one of the loading shafts (7) of the creel stand (6).

2. The automatic creel loading apparatus according to claim 1, wherein the multi-axis rotational loading robot (8) includes:
a rotating shaft (10) mounted to a distal end of an arm (8a); and
a plurality of grippers (9) mounted to the rotating shaft (10) and arranged linearly in order to unload the creels (1) from the loading pallet (2) and to load the creels (1) onto the loading shafts (7) of the creel stand (6), and
wherein each of the grippers (9) includes a creel shaft (11) configured to be inserted into a central hole formed in each of the creels (1), a pushing rod (12) for pushing each of the creels (1), and a chuck part (13) configured to be expanded or contracted in a radial direction.
